# EUROPEAN PATENT SPECIFICATION

(11) **EP 0 536 381 B1**
(45) Date of publication and mention of the grant of the patent: **19.06.1996**
(21) Application number: 92911245.6
(22) Date of filing: 24.04.1992
(51) Int. Cl.: C01F 7/02, C01F 7/44

(54) **PROCESS FOR PREPARING SUB-MICRON ALUMINA PARTICLES**
VERFAHREN ZUR HERSTELLUNG VON SUBMIKRONISCHEN ALUMINATEILCHEN
PROCEDE DE PREPARATION DE PARTICULES D'ALUMINE D'UNE GROSSEUR INFERIEURE AU MICRON

(30) Priority: 26.04.1991 US 692008
(43) Date of publication of application: 14.04.1993
(73) Proprietor: VISTA CHEMICAL COMPANY, Austin, TX 78726 (US)
(72) Inventor: BEGGS, Ronald, L., Leander, TX 78641 (US); LEWIS, Duane, J., Austin, TX 78734 (US); MADDERRA, Galan, K., Ponca City, OK 74601 (US); DECKER, Lewis, Bernard, Jr., Lago Vista, TX 78645 (US)
(74) Representative: Ruschke, Hans Edvard, Dipl.-Ing.
(86) International application number: US9203483
(87) International publication number: WO9219536

(56) References cited:
- EP-A- 0 278 469
- EP-A- 0 279 672
- JP-A-61 132 513
- US-A- 4 117 105
- US-A- 4 797 139
- US,H189 (BAUER) 06 January 1987, abstract; column 1, lines 7-13, 51-54.
- The American Ceramic Society, 1970, GITZEN, "Alumina as a Ceramic Material", pp. 12-19, see figure 5.

## Description

### Background of the Invention

### 1. Field of the Invention

The present invention relates to the preparation of anhydrous, e.g. alpha, alumina powders having high purity and uniform, small particle size, i.e., less than 1 µm (1 micron). More particularly, the present invention relates to a process for producing sub-micron alpha alumina powder without the need for intensive mechanical grinding.

### 2. Description of the Background

In many applications, high purity, small, uniform particle size anhydrous, e.g. alpha, alumina powders are required. For example, in the production of high technology ceramics it is known that the use of small, uniform particle size alpha alumina results in end products which are less susceptible to fracturing or other mechanical failure. Currently known technology for producing small, uniform particle size alpha alumina powder consists in firing hydrated aluminas, e.g. alumina trihydrates or monohydrates, at high temperatures to convert the hydrated alumina to the desired alpha phase. During this conversion, as is well known in the art, the small crystals of the alpha alumina precursors sinter into larger particles made up of clusters of alpha alumina crystals. In order to achieve the desired sub-micron size, it is thus necessary to subject the strongly agglomerated alpha alumina particles to intensive mechanical grinding, e.g. ball milling. Not only is this expensive and time consuming, but it rarely leads to a uniform particle size of the end product alpha alumina powder. Moreover, the intensive grinding invariably introduces impurities (from the grinding equipment) into the end product alpha alumina powder which ultimately end up in the ceramic products produced from the powder. These impurities coupled with the non-uniform size of the alpha alumina particles set up mechanical weak points in the ceramic products produced subjecting them to stress and easy fracture.

EP-A-0 279 672 discloses a process for obtaining alpha-alumina having a particle medium size of from 0.1 to 1 µm comprising calcining a solid powder of hydrated alumina having a surface area of from 2 to 12 m²/g and grinding.

### Summary of the Invention

It is therefore an object of the present invention to provide an improved process for producing anhydrous alumina powder of uniform, small particle size, which process eliminates the need for extensive mechanical grinding and therefore provides a small particle size alpha-alumina powder being substantially free of impurities normally introduced from intensive mechanical grinding and which process provides a method for controlling the particle size of an anhydrous alumina powder by controlling the surface area/crystal size of an anhydrous alumina precursor used to produce the powder.

The above object is achieved by the process of the present invention according to claim 1. Preferred embodiments of this process are described in claims 2 to 12.

According to one aspect of the present invention, a hydrated alumina having a surface area of from 10 to 70 m²/g is calcined under conditions which produce an agglomerated anhydrous alumina, the agglomerated anhydrous alumina being de-agglomerated to produce an anhydrous alumina powder having an average particle size of less than 1 µm (1 micron).

According to another aspect of the present invention, a mixture of an aqueous medium and an anhydrous alumina precursor is treated at a temperature greater than 122,1°C (250°F) and at a pressure equal to or greater than about the vapor pressure of water at the treating temperature for a period of time sufficient to produce a slurry containing a hydrothermally treated alumina having a surface area of from 10 to 70 m²/g. The hydrothermally treated alumina is recovered from the slurry, dried and calcined to produce an anhydrous alumina product which when de-agglomerated produces an anhydrous alumina powder having an average particle size of less than 1 µm (1 micron).

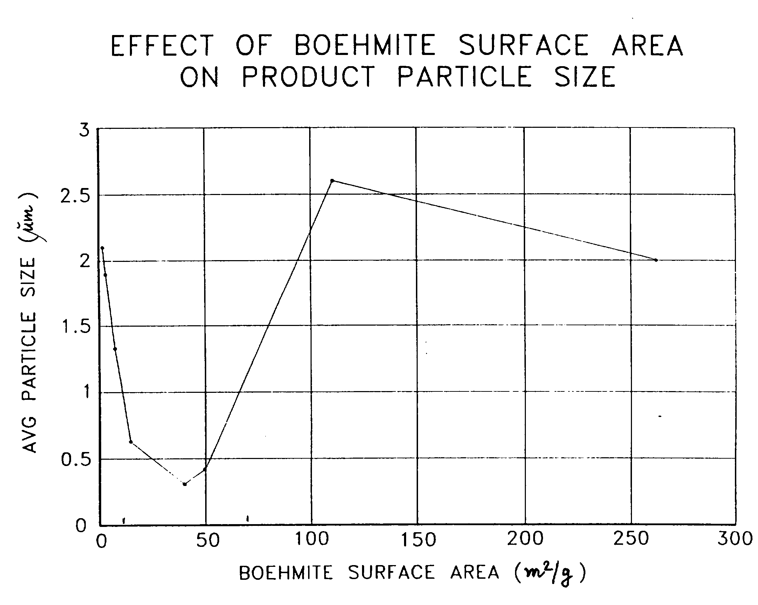

### Brief Description of the Drawing

The single figure is a graph showing the relationship of final, milled particle size alpha-alumina to starting boehmite surface area (crystal size).

### Description of the Preferred Embodiments

The discovery of the present invention is that by calcining a hydrated alumina having a surface area of from 10 to 70 m²/g to produce an anhydrous alumina agglomerate and dc-agglomerating, e.g., grinding, the agglomerate, it is possible to obtain a high purity anhydrous alumina powder having an average particle size of less than about 1 µm (1 micron). Although the hydrated alumina having the required surface area can be obtained from natural sources, in practice it is conveniently obtained by the hydrothermal treatment of an anhydrous alumina precursor. The term anhydrous alumina precursor, as used herein, refers to any hydrated alumina which upon heating to a given temperature, depending upon the particular hydrated alumina, will convert to Al₂O₃, e.g. alpha alumina, gamma alumina, and delta alumina. For purposes of describing the invention with particularity, the term "alpha alumina" will be employed, it being understood that the description is equally applicable to any anhydrous alumina. Non-limiting examples of suitable anhydrous alumina precursors include pseudoboehmite, boehmite, bayerite, and diaspore, whether obtained from natural or synthetic sources. A preferred alpha alumina precursor comprises a pseudoboehmite or boehmite alumina. The preferred boehmite, alpha alumina precursor, may be either of the water-dispersible type such as disclosed in U.S. -A- 4,676,928 or of the acid-dispersible type such as disclosed in U.S. -A- 4,746,503. Boehmite is commonly obtained synthetically by the hydrolysis of aluminum alkoxides in the well known fashion. Typical methods for preparing such aluminum alkoxides are shown, for example, in U.S. -A- 4,242,271. The aluminum alkoxide can be hydrolyzed, in the well known manner, such as by the process taught in U.S. -A-4,202,870. Especially preferred are boehmite aluminas obtained from the hydrolysis of aluminum alkoxides derived from Ziegler Chemistry in the well known manner. However, it will be recognized that boehmite alumina from other sources can be formed into slurries and used in the process of the present invention.

In conducting the process of the present invention to provide a source of hydrated alumina having the required surface area, a mixture of an aqueous medium, e.g. deionized water, and the alpha alumina precursor is formed, the alpha alumina precursor generally being present in an amount of from 1 to 35% by weight calculated as Al₂O₃. In forming the mixture of the alpha alumina precursor and the aqueous medium, other additives can be incorporated so long as they do not adversely affect the crystal growth of the alpha alumina precursor. For example, the addition of carbon dioxide, acids can be tolerated provided there is no interference with obtaining the desired surface area via crystal growth.

The mixture (slurry) of the aqueous medium and the alpha alumina precursor, once formed, is subjected to an elevated temperature of greater than 122,1°C (250°F) preferably from 150,1°C (300°F) to 486,1°C (900°F), especially from 178,1°C (350°F) to 402,1°C (750°F), for a period of time sufficient to produce a slurry containing a hydrothermally treated alumina having a surface area of from 10 to about 70, m²/g. Generally the pH will be maintained in a range of from 3 to 11. It will be appreciated that the desired surface area/crystal size can be obtained either by using lower temperatures and longer treating times or higher temperatures and shorter treating times. In general, the desired surface area can be obtained in a time frame of from 1 hour to 5 days again depending e.g. upon the temperature employed, and the starting material. Although high pressures can be employed, e.g., 0,51 MPa to 22,3 MPa (5 to 220 atmospheres) or greater, it is generally only necessary to conduct the hydrothermal treatment at a pressure approximately at or above the vapor pressure of water at the particular treating temperature in order to prevent water loss by vaporization. The hydrothermal treatment can be carried out, preferably with agitation, although quiescent conditions may be employed.

Once the alpha alumina precursor has been hydrothermally treated sufficiently to obtain the desired surface area, which can be determined by methods well known in the art, the hydrothermally treated alumina is recovered from the slurry by spray drying, filtering, centrifugation or other well known methods. If necessary, e.g. if recovered by filtration, the recovered hydrothermally treated alumina is preferably dried, as for example by oven drying, and then fired or calcined to produce the alpha alumina end product.

In calcining the hydrated alumina having the desired surface area, the temperature employed will depend upon the nature of the alpha alumina precursor, i.e., whether prepared according to the hydrothermal process of this invention, obtained from naturally occurring sources, or prepared according to other methods. Thus, calcining temperature can range from 900°C to 1400°C, depending on the particular alpha alumina precursor employed. Generally speaking, however, calcining or firing temperatures of 1000°C to 1300°C are employed, particularly when the alpha alumina precursor is boehmite, the calcining being conducted for a period of time ranging from 1 minute to 4 hours. The calcining can be conducted in conventional calcining equipment well known in the art.

Calcining produces clusters of weakly agglomerated alpha alumina particles. To convert the agglomerate into the desired alpha alumina powder, it is only necessary to subject the agglomerated alpha alumina to a relatively mild mechanical grinding technique such as milling under conditions which do not result in a wearing away of the components of the grinding apparatus such that any significant amount of impurities from such components are introduced into the alpha alumina powder. For example, whereas in prior art techniques intensive mechanical grinding, e.g. ball milling, is necessary to reduce the clusters of alpha alumina crystals to suitable sub-micron particle size, the agglomerations produced by the present invention are relatively loosely bound and the particles size of the alpha alumina making up the agglomerations are such that a relatively mild grinding technique such as jet milling (air impact) can be employed. In general, it can be stated that any de-agglomeration process which relies primarily on impingement of the agglomerates and/or particles thereof with one another to obtain the desired sub-micron size can be considered mild grinding, as that term is used herein, as distinguished from grinding which relies primarily on the agglomerates and/or particles thereof being reduced in size by virtue of being literally crushed between components of the grinding equipment.

It is desirable, for purposes of lowering calcining temperatures of the hydrothermally treated alpha alumina precursor, to introduce seed crystals of the alpha alumina, or other materials which are crystallographically similar, to the mixture of the aqueous medium and the alpha alumina precursor prior to the hydrothermal treatment, after the hydrothermal treatment prior to drying, or if desired, to the dry hydrothermally treated alpha alumina precursor. In the latter method, for example, the dried hydrothermally treated alumina precursor or a hydrated alumina from some other source can be dispersed in an aqueous medium and the alpha alumina seed particles added to the slurry, the slurry being agitated to produce a uniform mixture. The seed crystals of alpha alumina added will have an average particle size of less than 1 µm (1 micron) and be added in an amount of from 0.05 to 90% by weight based on the weight of the alpha alumina precursor present. The addition of alpha alumina seed particles lowers the conversion temperature of the alpha alumina precursor to alpha alumina and aides in maintaining a looser agglomeration of the alpha alumina obtained by calcining the hydrothermally treated alpha alumina precursor.

To more fully illustrate the present invention, the following non-limiting example are presented.

### Example

CATAPAL^{®} or DISPAL^{®} alumina, boehmite aluminas obtained from the hydrolysis of aluminum alkoxide produced by Ziegler Chemistry and marketed by Vista Chemical Company, were employed in all cases. In Runs 2-9 (See Table below) various mixtures of the aluminas (5 to 12% by weight Al₂O₃) in aqueous mediums were prepared and hydrothermally treated at various temperatures ranging from 178,1°C (350°F) to 346,1°C (650°F) for varying periods of time ranging from 8 hours to 72 hours to obtain boehmite alumina having a range of surface areas (crystal size). The hydrothermal treatment was conducted at a pressure approximately at or slightly above the vapor pressure of water at the treating temperature to avoid loss of water during the hydrothermal treatment. CATAPAL^{®} alumina was used as a comparison in Run 1.

Hydrothermally treated aluminas were recovered from slurries either by spray drying (Runs 2-5) or oven drying at 100°C at atmospheric pressure (Runs 6-9). The dried precursors were then calcined in a furnace at 1250°C for one hour. The calcined agglomerations of the alpha alumina were ground using a jet mill. In cases where the average crystal size of the starting boehmite was the proper size, the use of the jet mill was sufficient to completely de-agglomerate the alpha alumina, i.e. if the crystal size was too small or too large, sub-micron particle size was not obtained. As is well known, mild grinding techniques such as jet milling do not introduce impurities into the alpha alumina powder as a result of any significant wearing away of the contacting (grinding) components of the grinding apparatus. The surface areas of the de-agglomerated hydrothermally treated alumina precursors were obtained by (BET) nitrogen adsorption.

The table below shows the relationship between the surface area of the hydrothermally treated alumina precursors and the average particle size of the alpha alumina obtained therefrom.

| Run | ALPHA ALUMINA PRECURSOR | | ALPHA ALUMINA |
|---|---|---|---|
| | SURFACE AREA m²/g | CRYSTAL SIZE 020 nm (Å) | AVERAGE PARTICLE SIZE µm |
| 1 comparative run | 260 | 3,5 (35) | 2.0 |
| 2 comparative run | 110 | 11 (110) | 2.6 |
| 3 | 49 | 39 (390) | 0.57 |
| 4 | 40 | 48 (480) | 0.32 |
| 5 | 34 | 56 (560) | 0.29 |
| 6 | 16 | >60 (>600) | 0.62 |
| 7 comparative run | 5.5 | >200 (>2000) | 1.33 |
| 8 comparative run | 2.5 | >200 (>2000) | 1.89 |
| 9 comparative run | 1.5 | >200 (>2000) | 2.09 |

As can be seen, when the surface area of the hydrothermally treated alpha alumina precursor is maintained in a range of from 10 to 70 m²/g, one can obtain an alpha alumina powder having an average particle size of less than 1 µm (1) micron). The data in the Table is depicted graphically in the accompanying Figure. Moreover, because the powder can be obtained by jet milling, a relatively mild grinding technique, the powder is not contaminated with impurities from the grinding equipment, a common problem when intensive grinding (e.g. ball milling) is necessary to achieve a sub-micron size.

It has been found that if seeds of alpha alumina particles having an average particle size of less than 1 µm (1 micron) are added, the hydrothermally treated alpha alumina precursor, particularly when boehmite is used, will convert to alpha alumina at a lower temperature. Moreover, the alpha alumina obtained on calcination is less agglomerated. Accordingly, this further enhances the ease of dc-agglomerating the alpha alumina to the powder form. In using this seeding technique, the alpha alumina particles can be added to the mixture of the alpha alumina precursor and the aqueous medium prior to the hydrothermal treatment. Alternately, the dried, hydrothermally treated alpha alumina precursor can be dispersed in an aqueous system and the alpha alumina seeds added, the mixture then being agitated to produce a uniform dispersion. When this seeding technique is used, the alpha alumina seed particles are added in an amount of from 0.05 to 90% by weight of the alpha alumina precursor, an amount of from 1 to 25 % by weight being particularly preferred. Actual experiments in using this seeding technique coupled with the hydrothermal crystal growing technique have shown that the calcining temperature can be lowered to 1100°C which allows the use of conventional rotary calcining equipment equipped with metal alloy furnace tubes thus avoiding the need for expensive, fragile ceramic tubes. Boehmite alumina hydrothermally treated according to the process of the present invention must normally be calcined at a temperature of 1250°C to obtain conversion to the alpha form. Additionally, because of the lower temperature, energy savings are achieved. Another advantage lies in the fact that alpha alumina powder produced at 1100°C is less strongly agglomerated than alpha alumina produced at higher temperatures.

As noted, while the hydrated alumina to be calcined and having the desired surface area can be obtained from any source, e.g. naturally occurring, it is conveniently prepared by the hydrothermal process of the present invention.

## Claims

1. A process for producing sub-micron anhydrous alumina powder comprising:
treating a mixture of an aqueous medium and an anhydrous alumina precursor at a temperature of greater than 122,1°C (250°F) and a pressure sufficient to prevent any substantial loss of water at the treating temperature for a period of time sufficient to produce a slurry containing a hydrothermally treated alumina having a surface area of from 10 to 70 m²/g;
recovering hydrothermally treated alumina from said slurry;
calcining the hydrothermally treated alumina at a temperature and for a time sufficient to produce an anhydrous alumina product; and
de-agglomerating the anhydrous alumina product to obtain an anhydrous alumina powder having an average particle size of less than 1 µm (1 micron.)

2. The process of Claim 1 wherein the alumina product is alpha alumina.

3. The process of Claim 1 or 2 wherein said hydrothermal treatment is carried out at a temperature of from 178,1°C (350°F) to 402,1°C (750°F) for a period of time ranging from 1 hour to 5 days.

4. The process of any of claims 2 to 3 wherein said mixture contains from 5 to 35 percent by weight alpha alumina precursor as Al₂O₃.

5. The process of any of claims 2 to 4 wherein said alpha alumina precursor comprises boehmite.

6. The process of any of claims 3 to 5 wherein said temperature is in the range of from 178,1°C (350°F) to 402,1°C (750°F) and the time is from 1 to 24 h (hours).

7. The process of any of claims 1 to 6 wherein seed particles are introduced into said mixture prior to said hydrothermal treatment, said seed particles having an average particle size less than 1 µm (1) micron),

8. The process of Claim 7 wherein said seed particles are added in an amount of from 0.05 to 90% by weight based on the weight of said alpha alumina precursor.

9. The process of any of claims 1 to 8 wherein said seed particles are added to said hydrothermally treated alumina.

10. The process of Claim 9 wherein said seed particles are added in an amount of from 0.05 to 90% by weight based on the weight of said alpha alumina precursor.

11. The process of any of claims 1 to 10 wherein said calcining is conducted at a temperature of from 900°C to 1400°C depending on the alpha alumina precursor used.

12. The process of Claim 11 wherein said calcining is conducted for a period of from 1 min (minute) to 4 h (hours).

## Patentansprüche

1. Verfahren zur Herstellung von wasserfreiem Aluminiumoxid-Pulver mit einer Teilchengröße im Submikrometer-Bereich, das umfaßt:
die Behandlung einer Mischung aus einem wäßrigen Medium und einem wasserfreien Aluminiumoxid-Vorläufer bei einer Temperatur von über 122,1°C (250°F) und einem Druck, der ausreicht, um beträchtliche Wasserverluste bei der Behandlungstemperatur zu verhindern, für eine Zeitspanne, die ausreicht für die Herstellung einer Aufschlämmung, die ein hydrothermisch behandeltes Aluminiumoxid mit einer Oberflächengröße von 10 bis 70 m²/g enthält;
die Abtrennung (Gewinnung) des hydrothermisch behandelten Aluminiumoxids aus der Aufschlämmung;
das Calcinieren des hydrothermisch behandelten Aluminiumoxids bei einer Temperatur und für eine Zeitspanne, die für die Herstellung eines wasserfreien Aluminiumoxid-Produkts ausreicht; und
die Deagglomeration des wasserfreien Aluminiumoxid-Produkts zur Herstellung eines wasserfreien Aluminiumoxid-Pulvers mit einer durchschnittlichen Teilchengröße von weniger als 1 µm (1 Mikrometer).

2. Verfahren nach Anspruch 1, worin das Aluminiumoxid-Produkt α-Aluminiumoxid ist.

3. Verfahren nach Anspruch 1 oder 2, worin die hydrothermische Behandlung bei einer Temperatur von 178,1 bis 402,1°C (350-750°F) für eine Zeitspanne in dem Bereich von 1 Stunde bis 5 Tagen durchgeführt wird.

4. Verfahren nach einem der Ansprüche 2 bis 3, worin die Mischung 5 bis 35 Gew.-% α-Aluminiumoxid-Vorläufer als Al₂O₃ enthält.

5. Verfahren nach einem der Ansprüche 2 bis 4, worin der α-Aluminiumoxid-Vorläufer Boehmit umfaßt.

6. Verfahren nach einem der Ansprüche 3 bis 5, worin die Temperatur in dem Bereich von 178,1 bis 402,1°C (350-750°F) liegt und die Zeitspanne 1 bis 24 h (Stunden) beträgt.

7. Verfahren nach einem der Ansprüche 1 bis 6, worin die lmpf-Teilchen vor der hydrothermischen Behandlung in die Mischung eingeführt werden, wobei die Impfteilchen eine durchschnittliche Teilchengröße von weniger als 1 µm (1 Mikrometer) haben.

8. Verfahren nach Anspruch 7, worin die Impfteilchen in einer Menge von 0,05 bis 90 Gew.-%, bezogen auf das Gewicht des α-Aluminiumoxid-Vorläufers, zugegeben werden.

9. Verfahren nach einem der Ansprüche 1 bis 8, worin die Impfteilchen dem hydrothermisch behandelten Aluminiumoxid zugegeben werden.

10. Verfahren nach Anspruch 9, worin die Impfteilchen in einer Menge von 0,05 bis 90 Gew.-%, bezogen auf das Gewicht des α-Aluminiumoxid-Vorläufers, zugegeben werden.

11. Verfahren nach einem der Ansprüche 1 bis 10, worin das Calcinieren bei einer Temperatur von 900 bis 1400°C, je nach dem verwendeten α-Aluminiumoxid-Vorläufer, durchgeführt wird.

12. Verfahren nach Anspruch 11, worin das Calcinieren für eine Zeitspanne von 1 min (Minute) bis 4 h (Stunden) durchgeführt wird.

## Revendications

1. Procédé de production de poudre d'alumine anhydre submicronique comprenant :
le traitement d'un mélange d'un milieu aqueux et d'un précurseur d'alumine anhydre à une température supérieure à 122,1°C (250°F) et à une pression suffisante pour éviter toute perte substantielle d'eau à la température de traitement pendant une durée suffisante pour produire une suspension contenant une alumine hydrothermiquement traitée présentant une surface spécifique de 10 à 70 m²/g;
la récupération d'alumine hydrothermiquement traitée de ladite suspension;
la calcination de l'alumine hydrothermiquement traitée à une température et pendant une durée suffisantes pour produire un produit d'alumine anhydre ; et
la dé-agglomération du produit d'alumine anhydre pour obtenir une poudre d'alumine anhydre présentant une taille moyenne de particules inférieure à 1 µm (1 micron).

2. Procédé selon la revendication 1, dans lequel le produit d'alumine est l'alumine alpha.

3. Procédé selon la revendication 1 ou 2, dans lequel on réalise ledit traitement hydrothermique à une température de 178,1°C (350°F) à 402,1°C (750°F) pendant une durée comprise entre 1 h et 5 jours.

4. Procédé selon l'une quelconque des revendications 2 à 3, dans lequel ledit mélange contient de 5 à 35 % en poids de précurseur d'alumine alpha en tant que Al₂O₃.

5. Procédé selon l'une quelconque des revendications 2 à 4, dans lequel ledit précurseur d'alumine alpha comprend de la boéhmite.

6. Procédé selon l'une quelconque des revendications 3 à 5, dans lequel ladite température se trouve dans l'intervalle de 178,1°C (350°F) à 402,1°C (750°F) et la durée est comprise entre 1 et 24 h (heures).

7. Procédé selon l'une quelconque des revendications 1 à 6, dans lequel on introduit des particules de germe cristallin dans ledit mélange avant ledit traitement hydrothermique, lesdites particules de germe cristallin présentant une taille moyenne de particules inférieure à 1 µm (1 micron).

8. Procédé selon la revendication 7, dans lequel on ajoute lesdites particules de germe cristallin dans une quantité de 0,05 à 90 % en poids, rapportés au poids dudit précurseur d'alumine alpha.

9. Procédé selon l'une quelconque des revendications 1 à 8, dans lequel on ajoute lesdites particules de germe cristallin à ladite alumine hydrothermiquement traitée.

10. Procédé selon la revendication 9, dans lequel on ajoute lesdites particules de germe cristallin dans une quantité de 0,05 à 90 % en poids, rapportés au poids dudit précurseur d'alumine alpha.

11. Procédé selon l'une quelconque des revendications 1 à 10, dans lequel on réalise ladite calcination à une température de 900°C à 1400°C selon le précurseur d'alumine alpha utilisé.

12. Procédé selon la revendication 11, dans lequel on réalise ladite calcination pendant une durée de 1 min (minute) à 4 h (heures).
